(19) Europäisches Patentamt / European Patent Office / Office européen des brevets

(11) EP 4 725 745 A1

(12) **EUROPEAN PATENT APPLICATION**
published in accordance with Art. 153(4) EPC

(43) Date of publication:
15.04.2026 Bulletin 2026/16

(21) Application number: 24818678.5

(22) Date of filing: 05.06.2024

(51) International Patent Classification (IPC):
B60L 15/20 (2006.01)    B60W 30/18 (2012.01)

(52) Cooperative Patent Classification (CPC):
Y02T 10/72

(86) International application number:
PCT/CN2024/097490

(87) International publication number:
WO 2024/251146 (12.12.2024 Gazette 2024/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 08.06.2023 CN 202310678579

(71) Applicant: BYD Company Limited
Shenzhen, Guangdong 518118 (CN)

(72) Inventors:
• YANG, Dongsheng
  Shenzhen, Guangdong 518118 (CN)
• ZHU, Futang
  Shenzhen, Guangdong 518118 (CN)
• XU, Boliang
  Shenzhen, Guangdong 518118 (CN)
• LYU, Gaofeng
  Shenzhen, Guangdong 518118 (CN)
• DUAN, Ziwen
  Shenzhen, Guangdong 518118 (CN)

(74) Representative: Mathys & Squire
The Shard
32 London Bridge Street
London SE1 9SG (GB)

(54) **VEHICLE ENERGY RECOVERY METHOD AND APPARATUS**

(57) A vehicle energy recovery method and apparatus are applied to the field of vehicles. After determining a sliding feedback torque of a vehicle in a current operating condition and a maximum allowable feedback torque of the vehicle, a vehicle control unit can perform energy recovery based on a minimum feedback torque between the maximum allowable feedback torque and the sliding feedback torque.

```
┌─────────────────────────────────────────────────┐
│ Determine a sliding feedback torque of a vehicle │ ── 101
│ in a current operating condition                 │
└─────────────────────────────────────────────────┘
                        │
                        ▼
┌─────────────────────────────────────────────────┐
│ Determine a maximum allowable feedback torque of │ ── 102
│ the vehicle                                      │
└─────────────────────────────────────────────────┘
                        │
                        ▼
┌─────────────────────────────────────────────────┐
│ Perform energy recovery based on a minimum       │ ── 103
│ feedback torque between the maximum allowable    │
│ feedback torque and the sliding feedback torque  │
└─────────────────────────────────────────────────┘
```

FIG. 1

EP 4 725 745 A1

**Description**

**CROSS REFERENCE TO RELATED APPLICATIONS**

This application is based on Chinese Patent Application No. 2023106785796, filed on June 8, 2023, and claims priority to this Chinese Patent Application, which is incorporated herein by reference in its entirety.

**TECHNICAL FIELD**

This application relates to the field of vehicles, and in particular, to a vehicle energy recovery method and apparatus.

**BACKGROUND**

An objective of energy recovery is to convert kinetic energy generated during sliding or braking of a vehicle into electrical energy, thereby enhancing endurance of the vehicle and improving economy of the entire vehicle. In current related technologies, energy utilization of a vehicle control unit during energy recovery is relatively low.

**SUMMARY**

This application aims to resolve one of the technical problems in the related art at least to a certain extent. Therefore, an objective of this application is to provide a vehicle energy recovery method and apparatus. In this method, after determining a sliding feedback torque of a vehicle in a current operating condition and a maximum allowable feedback torque of the vehicle, a vehicle control unit can perform energy recovery based on a minimum feedback torque between the maximum allowable feedback torque and the sliding feedback torque. That is, the vehicle control unit can self-adapt to a change of the current operating condition of the vehicle to perform energy recovery, thereby enhancing adaptability of energy recovery to operating conditions, increasing energy utilization efficiency, and improving driving experience of users.

In an aspect, a vehicle energy recovery method is provided, and the method includes:

> determining a sliding feedback torque of a vehicle in a current operating condition;
> determining a maximum allowable feedback torque of the vehicle; and
> performing energy recovery based on a minimum feedback torque between the maximum allowable feedback torque and the sliding feedback torque.

In another aspect, a computer-readable storage medium storing a vehicle energy recovery program is provided. When the vehicle energy recovery program is executed by a processor, the vehicle energy recovery method described in the above aspect is implemented.

In yet another aspect, a vehicle is provided, including a memory, a processor, and a vehicle energy recovery program stored in the memory and runnable on the processor. When the processor executes the vehicle energy recovery program, the vehicle energy recovery method described in the above aspect is implemented.

In still yet another aspect, a vehicle energy recovery apparatus is provided. The apparatus includes:

> a first determination module, configured to determine a sliding feedback torque of a vehicle in a current operating condition;
> a second determination module, configured to determine a maximum allowable feedback torque of the vehicle; and
> an energy recovery module, configured to perform energy recovery based on a minimum feedback torque between the maximum allowable feedback torque and the sliding feedback torque.

A part of additional aspects and advantages of this application will be given in the following description, and a part will become apparent from the following description, or will be learned through practice of this application.

**BRIEF DESCRIPTION OF DRAWINGS**

> FIG. 1 is a flowchart of a vehicle energy recovery method according to an embodiment of this application;
> FIG. 2 is a flowchart of another vehicle energy recovery method according to an embodiment of this application;
> FIG. 3 is a flowchart of yet another vehicle energy recovery method according to an embodiment of this application;
> FIG. 4 is a schematic diagram of a structure of a vehicle energy recovery device according to an embodiment of this application;
> FIG. 5 is a block diagram of a vehicle energy recovery apparatus according to an embodiment of this application;
> FIG. 6 is a block diagram of a first determination module according to an embodiment of this application;
> FIG. 7 is a block diagram of another vehicle energy recovery apparatus according to an embodiment of this application; and
> FIG. 8 is a block diagram of another first determination module according to an embodiment of this application.

## DESCRIPTION OF EMBODIMENTS

The following describes in detail embodiments of this application, examples of the embodiments are shown in the accompanying drawings. Same or similar reference numerals throughout the accompanying drawings indicate same or similar elements or elements having same or similar functions. The embodiments described below with reference to the accompanying drawings are examples, and are intended to explain this application and shall not be construed as limitations on this application.

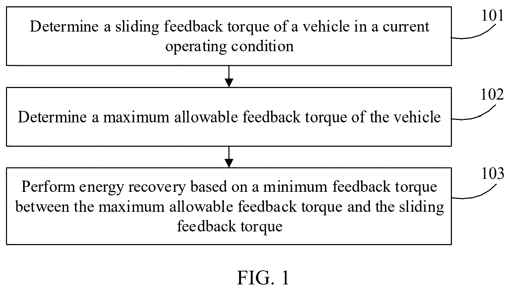

FIG. 1 is a flowchart of a vehicle energy recovery method according to an embodiment of this application. As shown in FIG. 1, the method includes the following steps:

Step 101: determine a sliding feedback torque of a vehicle in a current operating condition.

A vehicle control unit in the vehicle can determine the sliding feedback torque of the vehicle in the current operating condition during driving of the vehicle.

Step 102: determine a maximum allowable feedback torque of the vehicle.

After determining the sliding feedback torque of the vehicle in the current operating condition, the vehicle control unit can further determine the maximum allowable feedback torque of the vehicle.

Step 103: perform energy recovery based on a minimum feedback torque between the maximum allowable feedback torque and the sliding feedback torque.

After determining the maximum allowable feedback torque of the vehicle, the vehicle control unit can perform energy recovery based on the minimum feedback torque between the maximum allowable feedback torque and the sliding feedback torque.

In summary, an embodiment of this application provides a vehicle energy recovery method. In this method, after determining the sliding feedback torque of the vehicle in the current operating condition and the maximum allowable feedback torque of the vehicle, the vehicle control unit can perform energy recovery based on the minimum feedback torque between the maximum allowable feedback torque and the sliding feedback torque. That is, the vehicle control unit can self-adapt to a change of the current operating condition of the vehicle to perform energy recovery, thereby enhancing adaptability of energy recovery to operating conditions, increasing energy utilization efficiency, and improving driving experience of users.

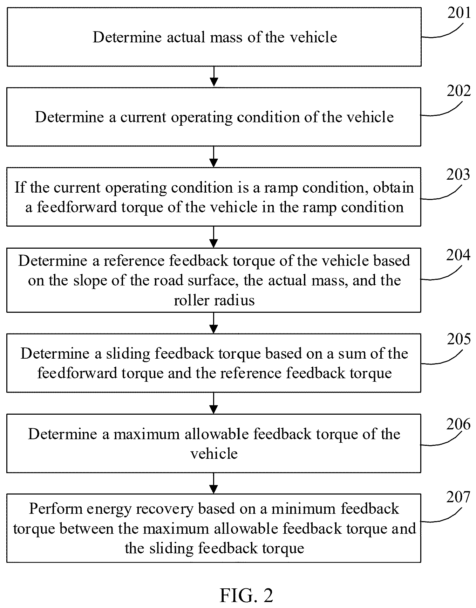

FIG. 2 is a flowchart of another vehicle energy recovery method according to an embodiment of this application. As shown in FIG. 2, the method may include the following steps:

Step 201: determine actual mass of the vehicle in a process in which the vehicle is in accelerated driving.

The vehicle control unit can determine the actual mass of the vehicle in the process in which the vehicle is performing accelerated driving. It should be noted that accelerated driving of the vehicle refers to continuously accelerated driving of the vehicle in a target time period. That the vehicle does not satisfy the accelerated driving means that the vehicle does not perform accelerated driving in the target time period, or that the vehicle first performs accelerated driving and then stops performing accelerated driving in the target time period.

Accelerated driving of the vehicle can satisfy the following first conditions:

(11) a brake depth of the vehicle is equal to 0%;
(12) an accelerator depth of the vehicle is greater than an accelerator depth threshold B;
(13) a speed of the vehicle is greater than a first vehicle speed threshold C;
(14) an acceleration of the vehicle is greater than an acceleration threshold D;
(15) a wheel-end driving force is greater than 0;
(16) a traction control system (traction control system, TCS) is in an inactive state; and
(17) a first duration is greater than a first duration threshold E.

The vehicle control unit can determine a moment at which it is first detected that (11) to (16) in the first condition are satisfied as a start moment of the first duration, and determine a moment at which it is first detected that any one of (11) to (16) is not satisfied as an end moment of the first duration. The accelerator depth threshold B, the first vehicle speed threshold C, the acceleration threshold D, and the first duration threshold E can be pre-stored in the vehicle control unit.

A calculation time interval for acceleration is 0s to 1s, the accelerator depth threshold B may be between 0% to 100%, the first vehicle speed threshold C may be between 0 km/h to 120 km/h, the acceleration threshold D may be between 0 m/s$^2$ to 5 m/s$^2$, and the first duration threshold E is between 0s and 10s.

That the vehicle does not satisfy the accelerated driving may include one or more of the following second conditions:

(21) the brake depth of the vehicle is greater than 0%;
(22) the accelerator depth of the vehicle is equal to 0%;
(23) the speed of the vehicle is equal to 0;
(24) a state of any vehicle door is open; and
(25) a second duration is greater than a second duration threshold F.

The second duration threshold F is between 0s and 10s. The vehicle control unit can determine a moment at which it is first detected that at least one of (21) to (24) in the second condition are satisfied as a start moment of the second duration, and determine a moment at which it is first detected that (21) to (24) are not satisfied as an end moment of the second duration. The second duration threshold F can be pre-stored in the vehicle control unit.

In an embodiment of this application, during accelerated driving of the vehicle, the vehicle control unit can obtain a total driving force $F_{wheel}$, a first aerodynamic drag force $F_{wind1}$, and a total resistance acceleration $a$ that are of the vehicle, determine a target difference between the total driving force $F_{wheel}$ and the first aerodynamic drag force $F_{wind1}$, and determine a ratio of the target difference to the total resistance acceleration $a$ as actual mass. The actual mass $M$ can satisfy:

$$M = \frac{F_{wheel} - F_{wind1}}{a}.$$

The total driving force $F_{wheel}$ can satisfy:

$$F_{wheel} = \frac{TS \times \partial}{R},$$ where TS may be a torque of a power output shaft, $\partial$ may be transmission efficiency of a gearbox, and R may be a roller radius of a wheel. The roller radius of the wheel is pre-stored in the vehicle control unit.

The first aerodynamic drag force $F_{wind1}$ can satisfy: $$F_{wind1} = \frac{C_{D1} \times A1 \times v1^2}{21.15},$$ where $C_{D1}$ is a first wind drag coefficient, and the first wind drag coefficient is between 0 and 1; and $A1$ is a first frontal area, which is determined according to a vehicle model, and $v1$ is a vehicle speed during accelerated driving of the vehicle. The first wind drag coefficient and the first frontal area are pre-stored in the vehicle control unit.

During accelerated driving of the vehicle, the vehicle control unit can further obtain a first slope resistance acceleration $a_{gra1}$, a first rolling resistance acceleration $a_{roll1}$, and an accelerating resistance acceleration $a_{acc}$, and determine a total resistance acceleration $a$ based on a sum of the first slope resistance acceleration $a_{gra1}$, the first rolling resistance acceleration $a_{roll1}$, and the accelerating resistance acceleration $a_{acc}$.

The total resistance acceleration $a$ can satisfy $a = a_{roll1} + a_{gra1} + a_{acc}$, and the first rolling resistance acceleration $a_{roll1}$ can satisfy: $a_{roll1} = g \times f1 \times \cos(\tan^{-1}(\alpha 1))$, where $\alpha 1$ may be a slope of a road surface in an acceleration condition, and $f1$ may be a first rolling resistance resistance coefficient; and $g$ may be a gravity acceleration. The first slope resistance acceleration $a_{gra1}$ can satisfy: $a_{gra1} = g \times \sin(\tan^{-1}(\alpha 1))$, and the accelerating resistance acceleration $a_{acc}$ can satisfy $a_{acc} = a_{ac} \times \sigma$, where $\sigma$ may be a correction coefficient of rotating mass, and the correction coefficient of rotating mass is between 0 and 1; and $a_{ac}$ may be a current acceleration of the vehicle. The first rolling resistance resistance coefficient and the correction coefficient of rotating mass are pre-stored in the vehicle control unit.

In an embodiment of this application, during accelerated driving of the vehicle, the vehicle control unit may obtain one actual mass as the actual mass of the vehicle, or may obtain a plurality of actual masses and determine the actual mass of the vehicle based on the plurality of actual masses.

Optionally, the vehicle control unit may determine an average value of the plurality of actual masses as the actual mass of the vehicle. Alternatively, a maximum value and a minimum value in the plurality of actual masses may be removed, and the actual mass is determined based on an average value of remaining actual masses.

In an embodiment of this application, the vehicle control unit can obtain the brake depth, the accelerator depth, the speed of the vehicle, the state of the vehicle door, the state of the TCS, the torque of the power output shaft, and the transmission efficiency of the gearbox as described above through a local area network bus (controller area network, CAN).

Step 202: determine a current operating condition of the vehicle.

After obtaining the actual mass of the vehicle, the vehicle control unit can determine the current operating condition of the vehicle during driving of the vehicle. The current operating condition may include a ramp condition or a vehicle-following condition, and the ramp condition may include a downhill condition or an uphill condition.

The vehicle control unit can continuously obtain a slope of a road surface. If the slope of the road surface satisfies the following third condition, it can be determined that the current operating condition of the vehicle is a ramp condition. The third condition may include the following:

(31) an absolute value of the slope of the road surface is within a preset slope range; and
(32) a third duration is greater than a third duration threshold H.

A lower limit of the preset slope range is equal to G1, an upper limit is equal to G2, and the preset slope range may be 0% to 100%, that is, G1 ≤ |slope of the road surface| ≤ G2, and the third duration > the third duration threshold H. For example, the third duration threshold H may be between 0s and 10s. The preset slope range and the third duration threshold H can be pre-stored in the vehicle control unit.

The vehicle control unit can determine a moment at which it is first detected that (31) in the third condition is satisfied as a start moment of the third duration, and determine a moment at which it is first detected that (31) in the third condition is not satisfied as an end moment of the third duration.

If the vehicle control unit detects a fourth condition, it can be determined that the current operating condition of the vehicle is the vehicle-following condition. The fourth condition may include the following:

(41) a preceding vehicle is in a non-stationary state, and the preceding vehicle is located in a same lane as the vehicle;

(42) a distance between the vehicle and the preceding vehicle is less than or equal to a first distance I;

(43) a vehicle speed of the vehicle is greater than a sum of a vehicle speed of the preceding vehicle and a second vehicle speed threshold J;

(44) an absolute value of the slope of the road surface is less than or equal to a first slope value K; and

(45) a fourth duration is greater than a fourth duration threshold L.

The vehicle control unit can determine a moment at which it is first detected that (41) to (44) in the fourth condition are satisfied as a start moment of the fourth duration, and determine a moment at which it is first detected that at least one of (41) to (44) in the fourth condition is not satisfied as an end moment of the fourth duration. The first distance I, the second vehicle speed threshold J, the first slope value K, and the fourth duration threshold L can be pre-stored in the vehicle control unit.

For example, the first distance I may be 100 m, the second vehicle speed threshold J may be within 0 km/h to 50 km/h, the first slope value K is within 0% to 100%, and the fourth duration threshold L is within 0s to 10s.

In an embodiment of this application, the vehicle control unit can obtain the slope of the road surface, the vehicle speed of the preceding vehicle, the distance between the vehicle and the preceding vehicle, and a state of the preceding vehicle through a sensor.

Step 203: if the current operating condition is a ramp condition, obtain a feedforward torque of the vehicle in the ramp condition.

After detecting that the current operating condition is the ramp condition, the vehicle control unit can obtain the feedforward torque of the vehicle in the ramp condition.

Optionally, that the vehicle control unit obtains a feedforward torque of the vehicle in the ramp condition may include step A1 to step A4 below:

A1: obtain a second aerodynamic drag force, a second slope resistance acceleration, and a second rolling resistance acceleration that are of the vehicle in the ramp condition.

The second aerodynamic drag force $F_{wind2}$ can satisfy: $F_{wind2} = \dfrac{C_{D2} \times A2 \times v2^2}{21.15}$, where $C_{D2}$ is a second wind drag coefficient, and the second wind drag coefficient is between 0 and 1; and $A2$ is a second frontal area, and v2 is a vehicle speed of the vehicle in the ramp condition. The second wind drag coefficient and the first wind drag coefficient may be the same or different, and the second frontal area and the first frontal area may be the same or different. The second wind drag coefficient and the second frontal area can be pre-stored in the vehicle control unit.

The second slope resistance acceleration $a_{gra2}$ can satisfy: $a_{gra2} = g \times \sin(\tan^{-1}(\alpha2))$. The second rolling resistance acceleration $a_{roll2}$ can satisfy: $a_{roll2} = g \times f2 \times \cos(\tan^{-1}(\alpha2))$, where $\alpha2$ may be a slope of a road surface in a ramp condition, and f2 may be a second rolling resistance resistance coefficient. The second rolling resistance resistance coefficient and the first rolling resistance resistance coefficient may be the same or different. The second rolling resistance resistance coefficient can be pre-stored in the vehicle control unit.

A2: determine a first difference between the second slope resistance acceleration and the second rolling resistance acceleration.

That is, the first difference can satisfy: $a_{gra2} - a_{roll2}$.

A3: determine a first product of the first difference and the actual mass.

The first product can satisfy: $(a_{gra2} - a_{roll2}) \times M$.

A4: determine the feedforward torque based on a ratio of a second difference between the first product and the second aerodynamic drag force to the roller radius.

The feedforward torque $T_{feed}$ can satisfy:

$$T_{feed} = \frac{-F_{wind2} + \left(a_{gra2} - a_{roll2}\right) \times M}{R}.$$

Step 204: determine a reference feedback torque of the vehicle based on the slope of the road surface, the actual mass, and the roller radius.

After determining the feedforward torque, the vehicle control unit can determine the reference feedback torque of the vehicle based on the slope of the road surface, the actual mass, and the roller radius. The reference feedback torque $T_{v\text{-}target}$ can satisfy:

$$T_{v\text{-}target} = M \times 9.8 \times \sin(\arctan(\alpha2)) \times R.$$

Step 205: determine a sliding feedback torque based on a sum of the feedforward torque and the reference feedback torque.

After determining the reference feedback torque, the vehicle control unit can determine the sliding feedback torque based on the sum of the feedforward torque and the reference feedback torque. The sliding feedback torque $T_{grd\text{-}target}$ can satisfy: $T_{grd\text{-}target} = T_{v\text{-}target} + T_{feed}$.

The sliding feedback torque is determined based on the sum of the feedforward torque and the reference feedback torque, so as to ensure that a driver's expected vehicle speed can be achieved during downhill sliding feedback, thereby reducing the driver's operating intensity and improving energy recovery efficiency.

Step 206: determine a maximum allowable feedback torque of the vehicle.

After determining the sliding feedback torque of the vehicle in the current operating condition, the vehicle control unit can further determine the maximum allowable feedback torque of the vehicle.

The vehicle control unit can obtain a maximum allowable feedback power $P_{max}$ of the vehicle, a rotational speed $n_{mot}$ of a drive motor in the vehicle, and a transmission ratio $\iota$ from the drive motor to a power output shaft end, and can determine the maximum allowable feedback torque $T_{max}$ based on a ratio of a product of the maximum allowable feedback power $P_{max}$ and the transmission ratio $\iota$ to the rotational speed $n_{mot}$ of the drive motor. The maximum allowable feedback torque $T_{max}$ can satisfy $T_{max} = \dfrac{9550 \times P_{max} \times \iota}{n_{mot}}$.

The maximum allowable feedback power $P_{max}$ of the vehicle can satisfy:

$$P_{max} = \frac{\min(Pmot, Pbatt)}{\lambda} \times \alpha 2$$

, where $Pmot$ may be a maximum allowable feedback power of the drive motor, $Pbatt$ may be a maximum allowable charging power of a battery, and $\lambda$ may be feedback system efficiency of the drive motor feeding back to the battery.

The vehicle control unit can obtain the rotational speed of the drive motor, the maximum allowable charging power of the battery, and the maximum allowable feedback power of the drive motor through the CAN. Alternatively, the maximum allowable feedback torque can be pre-stored in the vehicle control unit.

Step 207: perform energy recovery based on a minimum feedback torque between the maximum allowable feedback torque and the sliding feedback torque.

After determining the maximum allowable feedback torque of the vehicle, the vehicle control unit can perform energy recovery based on the minimum feedback torque between the maximum allowable feedback torque and the sliding feedback torque.

In summary, an embodiment of this application provides a vehicle energy recovery method. In this method, after determining the sliding feedback torque of the vehicle in the current operating condition and the maximum allowable feedback torque of the vehicle, the vehicle control unit can perform energy recovery based on the minimum feedback torque between the maximum allowable feedback torque and the sliding feedback torque. That is, the vehicle control unit can self-adapt to a change of the current operating condition of the vehicle to perform energy recovery, thereby enhancing adaptability of energy recovery to operating conditions, increasing energy utilization efficiency, and improving driving experience of users.

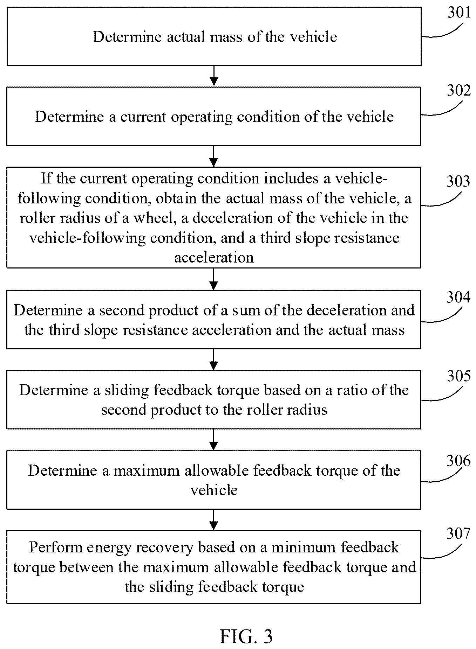

FIG. 3 is a flowchart of yet another vehicle energy recovery method according to an embodiment of this application. As shown in FIG. 3, the method may include the following steps:
Step 301: determine actual mass of the vehicle.

For a specific implementation process of step 301, reference can be made to step 201 described above.

Step 302: determine a current operating condition of the vehicle.

For a specific implementation process of step 302, reference can be made to step 202 described above.

Step 303: if the current operating condition includes a vehicle-following condition, obtain the actual mass of the vehicle, a roller radius of a wheel, a deceleration of the vehicle in the vehicle-following condition, and a third slope resistance acceleration.

After determining that the current operating condition is a vehicle-following condition, the vehicle control unit can obtain the actual mass of the vehicle, the roller radius of the wheel, the deceleration of the vehicle in the vehicle-following condition, and the third slope resistance acceleration.

The vehicle control unit can obtain a first vehicle speed of a preceding vehicle, a second vehicle speed of the vehicle, and an actual distance and a safety distance between the vehicle and the preceding vehicle, determine a third difference between a square of the first vehicle speed and a square of the second vehicle speed and a fourth difference between the actual distance and the safety distance, and determine the deceleration based on a ratio of the third difference to the fourth difference.

The deceleration $a_{target}$ of the vehicle in the vehicle-following condition can satisfy:

$$a_{target} = \frac{V^2 - V_0^2}{2 \times (S - S_0)}.$$

$V$ may be the first vehicle speed of the preceding vehicle, $V_0$ may be the second vehicle speed of the vehicle, $S$ may be the actual distance between the vehicle and the preceding vehicle, $S_0$ may be the safety distance between the vehicle and the preceding vehicle, that is, a minimum distance maintained between the vehicle and the preceding vehicle, and the safety distance may be between 0 m and 20 m. The safety distance can be pre-stored in the vehicle control unit.

The third slope resistance acceleration $a_{gra3}$ can satisfy: $a_{gra3} = g \times \sin(\tan^{-1}(\alpha 3))$. $\alpha 3$ may be a slope of a road surface in the vehicle-following condition.

The deceleration is calculated in combination with the safety distance to ensure that a safety distance between the vehicle and the preceding vehicle is maintained when the vehicle follows the preceding vehicle while sliding. Active deceleration through feedback reduces the driver's operating intensity and improves energy recovery efficiency.

Step 304: determine a second product of a sum of the deceleration and the third slope resistance acceleration and the actual mass.

After obtaining the actual mass of the vehicle, the roller radius of the wheel, the deceleration of the vehicle in the vehicle-following condition, and the third slope resistance acceleration $a_{gra3}$, the vehicle control unit can determine the second product of the sum of the deceleration $a_{target}$ and the third slope resistance acceleration $a_{gra3}$ and the actual mass M. The second product

can satisfy: $(a_{target} + a_{gra3}) \times M$.

Step 305: determine a sliding feedback torque based on a ratio of the second product to the roller radius.

After determining the second product, the vehicle control unit can determine the sliding feedback torque based on the ratio of the second product to the roller radius. The sliding feedback torque can satisfy:

$$\frac{\left(a_{t\arg et} + a_{gra3}\right) \times M}{R}.$$

Step 306: determine a maximum allowable feedback torque of the vehicle.

For a specific implementation process of step 306, reference can be made to step 206 described above.

Step 307: perform energy recovery based on a minimum feedback torque between the maximum allowable feedback torque and the sliding feedback torque.

For a specific implementation process of step 307, reference can be made to step 207 described above.

In conclusion, an embodiment of this application provides a vehicle energy recovery method. Through this method, after the sliding feedback torque of the vehicle in the current operating condition and the maximum allowable feedback torque of the vehicle are determined, energy recovery can be performed based on the minimum feedback torque between the maximum allowable feedback torque and the sliding feedback torque. That is, the vehicle control unit can self-adapt to a change of the current operating condition of the vehicle to perform energy recovery, thereby enhancing adaptability of energy recovery to operating conditions, increasing energy utilization efficiency, and improving driving experience of users.

In the embodiments of this application, influence of three factors: the actual mass, the slope of the road surface, and the safety distance are comprehensively considered. The sliding feedback torque in the ramp condition is controlled and calculated based on the feedforward torque, and the sliding feedback torque in the vehicle-following condition is calculated based on the safety distance. Therefore, adaptability to working conditions is good, and the user's driving experience is improved.

An embodiment of this application provides a computer-readable storage medium storing a vehicle energy recovery program. When the vehicle energy recovery program is executed by a processor, the vehicle energy recovery method described in the above embodiments is implemented, for example, the vehicle energy recovery method described in any one of FIG. 1 to FIG. 3.

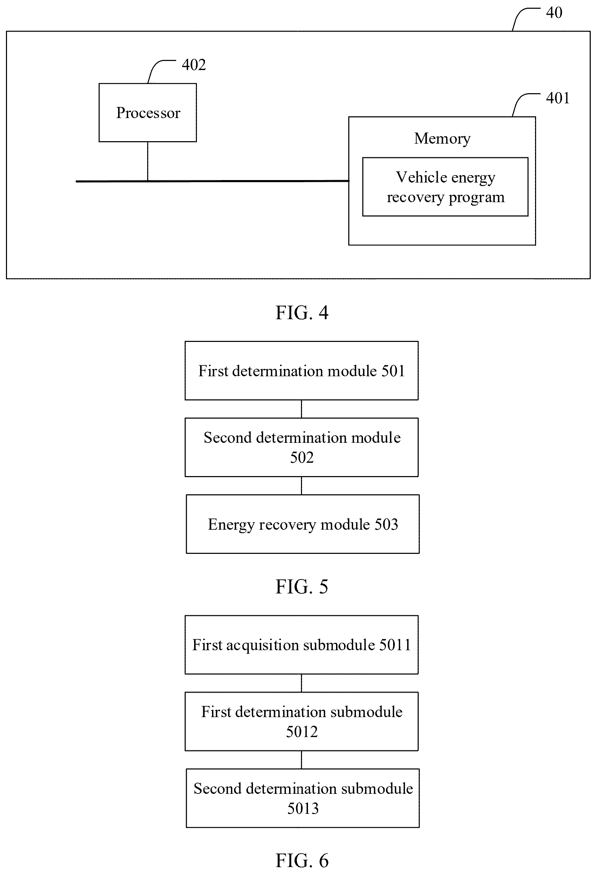

FIG. 4 is a schematic diagram of a structure of a vehicle according to an embodiment of this application. As shown in FIG. 4, the vehicle 40 may include a memory 401, a processor 402, and a vehicle energy recovery program stored in the memory 401 and runnable on the processor 402. When the processor 402 executes the vehicle energy recovery program, the vehicle energy recovery method described in the above embodiments is implemented, for example, the vehicle energy recovery method described in any one of FIG. 1 to FIG. 3.

FIG. 5 is a block diagram of a vehicle energy recovery apparatus according to an embodiment of this application. As shown in FIG. 5, the apparatus includes:

> a first determination module 501, configured to determine a sliding feedback torque of a vehicle in a current operating condition;
> a second determination module 502, configured to determine a maximum allowable feedback torque of the vehicle; and
> an energy recovery module 503, configured to perform energy recovery based on a minimum feedback torque between the maximum allowable feedback torque and the sliding feedback torque.

Optionally, the current operating condition includes a ramp condition. Referring to FIG. 6, the first determination module 501 includes:

> a first acquisition submodule 5011, configured to obtain a feedforward torque of a vehicle in a current operating condition;
> a first determination submodule 5012, configured to determine a reference feedback torque of the vehicle based on a slope of a road surface, actual mass of the vehicle, and a roller radius of a wheel; and
> a second determination submodule 5013, configured to determine a sliding feedback torque based on a sum of the feedforward torque and the reference feedback torque.

Optionally, the reference feedback torque $T_{v\text{-}target}$ satisfies:

$$T_{v-t\arg et} = M \times 9.8 \times \sin(\arctan(\alpha)) \times R;$$

$M$ is the actual mass of the vehicle, $\alpha$ is the slope of the road surface, and R is the roller radius of the wheel.

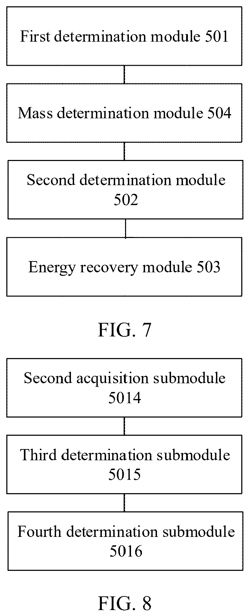

Optionally, referring to FIG. 7, the apparatus further includes: a mass determination module 504, configured to:

determine the actual mass of the vehicle in a process in which the vehicle is in accelerated driving.

Optionally, the mass determination module 504 is configured to:

> obtain, in the process in which the vehicle is in accelerated driving, a total driving force of the vehicle, the aerodynamic drag force of the vehicle, a first slope resistance acceleration, a first rolling resistance acceleration, and an accelerating resistance acceleration;
> determine a total resistance acceleration based on a sum of the first slope resistance acceleration, the first rolling resistance acceleration, and the accelerating resistance acceleration;

determine a target difference between the total driving force and the first aerodynamic drag force; and determine a ratio of the target difference to the total resistance acceleration as the actual mass.

Optionally, the first acquisition submodule 5011 is configured to:

obtain a second aerodynamic drag force, a second slope resistance acceleration, and a second rolling resistance acceleration that are of the vehicle in the current operating condition;
determine a first difference between the second slope resistance acceleration and the second rolling resistance acceleration;
determine a first product of the first difference and the actual mass; and
determine the feedforward torque based on a ratio of a second difference between the first product and the second aerodynamic drag force to the roller radius.

Optionally, the current operating condition includes a vehicle-following condition. Referring to FIG. 8, the first determination module 501 is configured to:

a second acquisition submodule 5014, configured to obtain actual mass of a vehicle, a roller radius of a wheel, a deceleration of the vehicle in a current operating condition, and a third slope resistance acceleration;
a third determination submodule 5015, configured to determine a second product of a sum of the deceleration and the third slope resistance acceleration and the actual mass; and
a fourth determination submodule 5016, configured to determine a sliding feedback torque based on a ratio of the second product to the roller radius.

Optionally, the second acquisition submodule 5014 is configured to:

obtain a first vehicle speed of a preceding vehicle, a second vehicle speed of the vehicle, and an actual distance and a safety distance between the vehicle and the preceding vehicle;
determine a third difference between a square of the first vehicle speed and a square of the second vehicle speed, and a fourth difference between the actual distance and the safety distance; and
determine the deceleration based on a ratio of the third difference to the fourth difference.

In summary, an embodiment of this application provides a vehicle energy recovery apparatus. In this apparatus, after the sliding feedback torque of the vehicle in the current operating condition and the maximum allowable feedback torque of the vehicle are determined, energy recovery can be performed based on the minimum feedback torque between the maximum allowable feedback torque and the sliding feedback torque. That is, the vehicle control unit can self-adapt to a change of the current operating condition of the vehicle to perform energy recovery, thereby enhancing adaptability of energy recovery to operating conditions, increasing energy utilization efficiency, and improving driving experience of users.

It should be noted that the logic and/or steps represented in the flowchart or described herein in another manner, for example, may be considered as an ordered list of executable instructions for implementing logical functions, and may be specifically implemented in any computer-readable medium, for use by an instruction execution system, apparatus, or device (for example, a computer-based system, a system including a processor, or another system that can fetch instructions from an instruction execution system, apparatus, or device and execute the instructions), or use in combination with the instruction execution system, apparatus, or device. In terms of this specification, the "computer-readable medium" may be any apparatus that may include, store, communicate, propagate, or transmit a program for use by or in combination with an instruction execution system, apparatus, or device. More specific examples (a non-exhaustive list) of the computer-readable medium include the following: an electrical connection part (electronic apparatus) having one or more cables, a portable computer disc box (magnetic apparatus), a random access memory (RAM), a read-only memory (ROM), an erasable programmable read-only memory (EPROM or a flash memory), an optical fiber apparatus, and a compact disc read-only memory (CDROM). In addition, the computer-readable medium may even be a paper or another suitable medium on which the program can be printed, since the program may be electronically obtained, for example, by optically scanning the paper or another medium and then performing editing, interpreting, or processing in another proper manner if necessary, and then the program is stored in a computer memory.

It will be understood that various parts of this application may be implemented by hardware, software, firmware, or a combination thereof. In the foregoing implementations, the plurality of steps or methods may be implemented by software or firmware stored in a memory and executed by a proper instruction execution system. For example, if the plurality of steps or methods are implemented by hardware, as in another implementation, the plurality of steps or methods may be implemented by using any one or a combination of the following technologies known in the art: a discrete logic circuit having a logic gate circuit for implementing a logical function for a data signal, an application-specific integrated circuit having a proper combined logic gate circuit, a programmable gate array (PGA), a field programmable gate array (FPGA), and the like.

In the description of this specification, description of reference terms such as "optionally", "some embodiments", "an example", "a specific example", or "some examples" mean that specific features, structures, materials, or characteristics described with reference to this embodiment or example are included in at least one embodiment or example of this application. In this specification, illustrative expressions of the foregoing terms do not necessarily refer to a same embodiment or example. Furthermore, the described specific features, structures, materials, or characteristics may be combined in any one or more embodiments or examples in a suitable manner.

In the description of this application, it will be understood that the orientation or positional relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, is an orientation or positional relationship shown based on the accompanying drawings, and is only for ease of describing this application and simplifying the descriptions, rather than indicating or implying that the apparatus or element referred to must have a specific orientation or be constructed and operated in a specific orientation, and therefore will not be understood as a limitation on this application.

In addition, the terms such as "first" and "second" used in the embodiments of this application are used for a descriptive purpose only and shall not be construed as indicating or implying relative importance or implicitly indicating the quantity of the technical features indicated in the embodiments. Therefore, features defined with terms such as "first" and "second" in the embodiments of this application may explicitly or implicitly indicate that the embodiments include at least one feature. In the description of this application, the expression "a plurality of" means at least two or two or more, for example, two, three, four, etc., unless otherwise clearly and specifically limited in the embodiments.

In this application, unless otherwise clearly specified or limited in the embodiments, terms such as "installed", "connected", "connection", and "fixed" that appear in the embodiments will be understood in a broad sense. For example, the connection may be a fixed connection, may be a detachable connection, or may be an integrated connection; it will be understood that the connection may be a mechanical connection, an electrical connection, or the like; and certainly, the connection may be a direct connection, or an indirect connection through an intermediate medium, or may be an internal communication of two elements, or an interaction relationship between two elements. For a person of ordinary skill in the art, a specific meaning of the foregoing terms in this application will be understood based on a specific implementation situation.

In this application, unless otherwise explicitly specified and defined, that the first feature is "above" or "below" the second feature may be that the first feature and the second feature are in direct contact, or the first feature and the second feature are in indirect contact through an intermediate medium. In addition, that the first feature is "on", "above", and "over" the second feature may be that the first feature is directly above or obliquely above the second feature, or merely indicates that a horizontal height of the first feature is higher than that of the second feature. That the first feature is "under", "below", and "beneath" the second feature may be that the first feature is directly below or obliquely below the second feature, or merely indicates that a horizontal height of the first feature is less than that of the second feature.

Although the embodiments of this application have been shown and described above, it will be understood that the foregoing embodiments are examples and cannot be construed as limitations on this application, and a person of ordinary skill in the art can make changes, modifications, substitutions, or variations on the foregoing embodiments within the scope of this application.

## Claims

1. A vehicle energy recovery method, comprising:

   determining a sliding feedback torque of a vehicle in a current operating condition;
   determining a maximum allowable feedback torque of the vehicle; and
   performing energy recovery based on a minimum feedback torque between the maximum allowable feedback torque and the sliding feedback torque.

2. The method according to claim 1, wherein the current operating condition comprises a ramp condition; and determining the sliding feedback torque of the vehicle in the current operating condition comprises:

   obtaining a feedforward torque of the vehicle in the current operating condition;
   determining a reference feedback torque of the vehicle based on a slope of a road surface, actual mass of the vehicle, and a roller radius of a wheel; and
   determining the sliding feedback torque based on a sum of the feedforward torque and the reference feedback torque.

3. The method according to claim 2, wherein the reference feedback torque $T_{v\text{-}target}$ satisfies:

$$T_{v-t\arg et} = M \times 9.8 \times \sin(\arctan(\alpha)) \times R,$$

wherein

$M$ is the actual mass of the vehicle, $\alpha$ is the slope of the road surface, and $R$ is the roller radius of the wheel.

4. The method according to claim 2 or 3, further comprising:

   determining the actual mass of the vehicle in a process in which the vehicle is in accelerated driving.

5. The method according to claim 4, wherein determining the actual mass of the vehicle comprises:

   obtaining, in the process in which the vehicle is in accelerated driving, a total driving force of the vehicle, a first aerodynamic drag force of the vehicle, a first slope resistance acceleration, a first rolling resistance acceleration, and an accelerating resistance acceleration;

   determining a total resistance acceleration based on a sum of the first slope resistance acceleration, the first rolling resistance acceleration, and the accelerating resistance acceleration;

   determining a target difference between the total driving force and the first aerodynamic drag force; and

   determining a ratio of the target difference to the total resistance acceleration as the actual mass.

6. The method according to any one of claims 2 to 4, wherein obtaining the feedforward torque of the vehicle in the current operating condition comprises:

   obtaining a second aerodynamic drag force, a second slope resistance acceleration, and a second rolling resistance acceleration that are of the vehicle in the current operating condition;

   determining a first difference between the second slope resistance acceleration and the second rolling resistance acceleration;

   determining a first product of the first difference and the actual mass; and

   determining the feedforward torque based on a ratio of a second difference between the first product and the second aerodynamic drag force to the roller radius.

7. The method according to claim 1, wherein the current operating condition comprises a vehicle-following condition; and determining the sliding feedback torque of the vehicle in the current operating condition comprises:

   obtaining a deceleration and a third slope resistance acceleration that are of the vehicle in the current operating condition;

   determining a second product of a sum of the deceleration and the third slope resistance acceleration and actual mass of the vehicle; and

   determining the sliding feedback torque based on a ratio of the second product to a roller radius of a wheel.

8. The method according to claim 7, wherein obtaining the deceleration of the vehicle in the current operating condition comprises:

   obtaining a first vehicle speed of a preceding vehicle, a second vehicle speed of the vehicle, and an actual distance and a safety distance between the vehicle and the preceding vehicle;

   determining a third difference between a square of the first vehicle speed and a square of the second vehicle speed, and a fourth difference between the actual distance and the safety distance; and

   determining the deceleration based on a ratio of the third difference to the fourth difference.

9. A computer-readable storage medium storing a vehicle energy recovery program, wherein when the vehicle energy recovery program is executed by a processor, the vehicle energy recovery method according to any one of claims 1 to 8 is implemented.

10. A vehicle, comprising a memory, a processor, and a vehicle energy recovery program stored in the memory and runnable on the processor, wherein when the processor executes the vehicle energy recovery program, the vehicle energy recovery method according to any one of claims 1 to 8 is implemented.

11. A vehicle energy recovery apparatus, comprising:

    a first determination module, configured to determine a sliding feedback torque of a vehicle in a current operating condition;

    a second determination module, configured to determine a maximum allowable feedback torque of the vehicle; and

    an energy recovery module, configured to perform energy recovery based on a minimum feedback torque between the maximum allowable feedback torque and the sliding feedback torque.

Determine a sliding feedback torque of a vehicle in a current operating condition ⟋ 101

Determine a maximum allowable feedback torque of the vehicle ⟋ 102

Perform energy recovery based on a minimum feedback torque between the maximum allowable feedback torque and the sliding feedback torque ⟋ 103

FIG. 1

Determine actual mass of the vehicle — 201

Determine a current operating condition of the vehicle — 202

If the current operating condition is a ramp condition, obtain a feedforward torque of the vehicle in the ramp condition — 203

Determine a reference feedback torque of the vehicle based on the slope of the road surface, the actual mass, and the roller radius — 204

Determine a sliding feedback torque based on a sum of the feedforward torque and the reference feedback torque — 205

Determine a maximum allowable feedback torque of the vehicle — 206

Perform energy recovery based on a minimum feedback torque between the maximum allowable feedback torque and the sliding feedback torque — 207

FIG. 2

| | |
|---|---|
| Determine actual mass of the vehicle | 301 |
| Determine a current operating condition of the vehicle | 302 |
| If the current operating condition includes a vehicle-following condition, obtain the actual mass of the vehicle, a roller radius of a wheel, a deceleration of the vehicle in the vehicle-following condition, and a third slope resistance acceleration | 303 |
| Determine a second product of a sum of the deceleration and the third slope resistance acceleration and the actual mass | 304 |
| Determine a sliding feedback torque based on a ratio of the second product to the roller radius | 305 |
| Determine a maximum allowable feedback torque of the vehicle | 306 |
| Perform energy recovery based on a minimum feedback torque between the maximum allowable feedback torque and the sliding feedback torque | 307 |

FIG. 3

/ 40

/ 402

Processor

/ 401

Memory

Vehicle energy
recovery program

FIG. 4

First determination module 501

Second determination module
502

Energy recovery module 503

FIG. 5

First acquisition submodule 5011

First determination submodule
5012

Second determination submodule
5013

FIG. 6

First determination module 501

Mass determination module 504

Second determination module 502

Energy recovery module 503

FIG. 7

Second acquisition submodule 5014

Third determination submodule 5015

Fourth determination submodule 5016

FIG. 8

## INTERNATIONAL SEARCH REPORT

| International application No. |
|---|
| **PCT/CN2024/097490** |

**A. CLASSIFICATION OF SUBJECT MATTER**

B60L15/20(2006.01)i; B60W30/18(2012.01)i

According to International Patent Classification (IPC) or to both national classification and IPC

**B. FIELDS SEARCHED**

Minimum documentation searched (classification system followed by classification symbols)

IPC: B60L, B60W

Documentation searched other than minimum documentation to the extent that such documents are included in the fields searched

Electronic data base consulted during the international search (name of data base and, where practicable, search terms used)

CNTXT, WPABSC, VEN, DWPI, ENTXTC, CJFD: 能量, 回收, 滑行, 回馈, 扭矩, 转矩, 最大, 最小, 前馈, 参考, 质量, 坡度, 坡道, energy, recycl+, slid+, feedback, torque, minimum, maximum, feedforward, mass, reference, slope,

**C. DOCUMENTS CONSIDERED TO BE RELEVANT**

| Category* | Citation of document, with indication, where appropriate, of the relevant passages | Relevant to claim No. |
|---|---|---|
| X | CN 107650909 A (BYD CO., LTD.) 02 February 2018 (2018-02-02) description, pages 3-8, and figures 1-9 | 1-2, 7, 9-11 |
| X | CN 104417557 A (BYD CO., LTD.) 18 March 2015 (2015-03-18) description, pages 3-11, and figures 1-7 | 1-2, 7, 9-11 |
| A | CN 115583158 A (ANHUI HUALING AUTOMOBILE CO., LTD.) 10 January 2023 (2023-01-10) entire document | 1-11 |
| A | CN 110936822 A (BORGWARD AUTOMOTIVE (CHINA) CO., LTD.) 31 March 2020 (2020-03-31) entire document | 1-11 |
| A | CN 102490722 A (CHONGQING CHANGAN AUTOMOBILE CO., LTD. et al.) 13 June 2012 (2012-06-13) entire document | 1-11 |
| A | CN 115583160 A (CHENGDU SAILISI TECHNOLOGY CO., LTD.) 10 January 2023 (2023-01-10) entire document | 1-11 |

☑ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 August 2024** | **22 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/097490** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 20230039812 A (HYUNDAI MOTOR CO., LTD. et al.) 22 March 2023 (2023-03-22) entire document | 1-11 |

Form PCT/ISA/210 (second sheet) (July 2022)

**INTERNATIONAL SEARCH REPORT**
Information on patent family members

International application No.

**PCT/CN2024/097490**

| Patent document cited in search report | | | Publication date (day/month/year) | Patent family member(s) | | | Publication date (day/month/year) |
|---|---|---|---|---|---|---|---|
| CN | 107650909 | A | 02 February 2018 | WO | 2018019120 | A1 | 01 February 2018 |
| CN | 104417557 | A | 18 March 2015 | EP | 3044057 | A1 | 20 July 2016 |
| | | | | WO | 2015032344 | A1 | 12 March 2015 |
| | | | | US | 2016221469 | A1 | 04 August 2016 |
| CN | 115583158 | A | 10 January 2023 | | None | | |
| CN | 110936822 | A | 31 March 2020 | | None | | |
| CN | 102490722 | A | 13 June 2012 | | None | | |
| CN | 115583160 | A | 10 January 2023 | | None | | |
| KR | 20230039812 | A | 22 March 2023 | | None | | |

Form PCT/ISA/210 (patent family annex) (July 2022)

**EP 4 725 745 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023106785796